# EUROPÄISCHE PATENTANMELDUNG

(11) **EP 0 887 659 A2**
(43) Veröffentlichungstag der Anmeldung: **30.12.1998**
(21) Anmeldenummer: 98810527.6
(22) Anmeldetag: 09.06.1998
(51) Int. Cl.: G01S 15/04, G01S 15/93

(54) **Akustisches Sehen**

(30) Priorität: 12.06.1997 CH 1438/97
(71) Anmelder: Kuehne, Roland, 5637 Beinwil/Freiamt (CH)
(72) Erfinder: Kuehne, Roland, 5637 Beinwil/Freiamt (CH)

(57) **Zusammenfassung**

Distanzen werden gemessen (1) und akustisch weitergegeben (3+4). Zur Orientierung, wenn die Sehkraft nicht benutzt werden kann.

## Beschreibung

Orten von Hindernissen und Abtästen von Räumen und Gegenständen mit dem Gehör. Erkennen von bewegten Gegenständen. Das Gerät kann in der Hand gehalten werden und ist mit einem Ohrwurm oder Lautsprecher mit dem Bediener akustisch verbunden. Mit dem Gerät kann man sich bei jeder Form von Sehbehinderung (Blindheit. Dunkelheit, Rauch, dichter Nebel) besser orientieren und sicherer bewegen.

### Für blinde oder sehbehinderte Personen:

Wie mit einem Blindenstock können Treppen, Hindernisse und Gegenstände ertastet werden, allerdings mit einer viel grösseren Reichweite. Bei einer kurzen Distanz ist der Ton tief, mit grösserer Distanz wird er höher. Mit etwas Uebung kann ein Raum komplett abgetastet werden, man kann ihn sich vorstellen.

Wenn sich eine Person oder ein Gegenstand nähert (z.B. Auto), wird der Ton heller, wenn es stehenbleibt bleibt er konstant. Beim Entfernen einer Person oder eines Gegenstandes wird der Ton tiefer.

Mit diesem Gerät kann sich eine blinde oder sehbehinderte Person viel weiträumiger orientieren und sicherer bewegen. Die Gefahren im Strassenverkehr werden deutlich kleiner.

### Für z.B. Feuerwehr:

Bessere Orientierung im dichten Rauch kann Leben retten.

### Für z.B. Militär:

Bessere Orientierung im Dunkeln, ohne gesehen zu werden.

### Zur Zeichnung:

1) Modul Ultraschall-Sender und Empfänger
2) Speisung Batterie oder Sonnenkollektor mit Gangreserve
3) Modul Tonverstärker
4) Ohrwurm oder Aehnliches

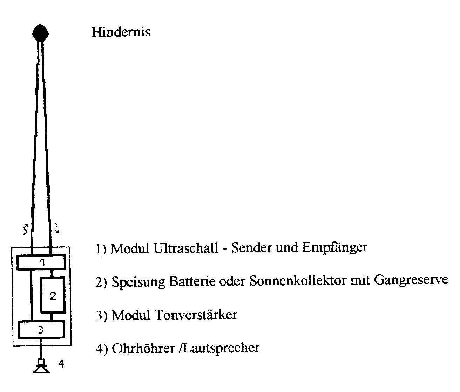

## Patentansprüche

1. Distanzen werden gemessen und an den Benutzer weitergegeben ohne dass die Sehkraft benötigt wird.
